# EUROPÄISCHE PATENTSCHRIFT

(11) **EP 2 111 287 B1**
(45) Veröffentlichungstag und Bekanntmachung des Hinweises auf die Patenterteilung: **09.03.2011**
(21) Anmeldenummer: 07857007.4
(22) Anmeldetag: 20.12.2007
(51) Int. Cl.: B01D 53/94, B01D 53/90, F01N 3/20

(54) **VERWENDUNG VON WÄSSRIGEN GUANIDINIUMFORMIAT-LÖSUNGEN ZUR SELEKTIVEN KATALYTISCHEN REDUKTION VON STICKOXIDEN IN ABGASEN VON FAHRZEUGEN**
USE OF AQUEOUS GUANIDINIUM FORMIATE SOLUTIONS FOR THE SELECTIVE CATALYTIC REDUCTION OF NITROGEN OXIDES IN EXHAUST GASES OF VEHICLES
UTILISATION DE SOLUTIONS AQUEUSES DE FORMIATE DE GUANIDINIUM POUR LA RÉDUCTION CATALYTIQUE SÉLECTIVE D'OXYDES D'AZOTE DANS DES FUMÉES DE COMBUSTION DE VEHICULES

(30) Priorität: 23.12.2006 DE 102006061377
(43) Veröffentlichungstag der Anmeldung: 28.10.2009
(73) Patentinhaber: AlzChem Trostberg GmbH, 83308 Trostberg (DE)
(72) Erfinder: HAMMER, Benedikt, 83342 Tacherting (DE); KRIMMER, Hans-Peter, 84558 Kirchweidach (DE); SCHULZ, Bernd, 84478 Waldkraiburg (DE); JACOB, Eberhard, 82152 Krailling (DE)
(74) Vertreter: Dey, Michael
(86) Internationale Anmeldenummer: PCT/EP2007/011284
(87) Internationale Veröffentlichungsnummer: WO 2008/077587

(56) Entgegenhaltungen:
- DE-A1- 4 221 451
- DE-A1-102004 043 632
- US-A- 6 051 040
- SAGARIK ET AL: "Structures and stability of salt-bridge in aqueous solution" BIOPHYSICAL CHEMISTRY, NORTH-HOLLAND, AMSTERDAM, NL, Bd. 117, Nr. 2, 1. September 2005 (2005-09-01), Seiten 119-140, XP005039411 ISSN: 0301-4622
- DATABASE CA [Online] CHEMICAL ABSTRACTS SERVICE, COLUMBUS, OHIO, US; 1977, SPRINGS, BLEECKER ET AL: "Equilibrium constants for association of guanidinium and ammonium ions with oxyanions. The effect of changing basicity of the oxyanion" XP002471323 gefunden im STN Database accession no. 1977:474255 & BIOORGANIC CHEMISTRY , 6(2), 181-90 CODEN: BOCMBM; ISSN: 0045-2068, 1977,

## Beschreibung

Die vorliegende Erfindung betrifft die Verwendung von wässrigen Guanidiniumformiat-Lösungen zur selektiven katalytischen Reduktion von Stickoxiden in Abgasen von Fahrzeugen, wobei aus den entsprechenden Guanidiniumformiat-Lösungen durch Verdampfung und katalytische Zersetzung Ammoniak erzeugt wird und dieses als Reduktionsmittel für die anschließende selektive katalytische Reduktion der Stickoxide dient.

Gemäß dem Stand der Technik dient Ammoniak (NH₃) bei der selektiven katalytischen Reduktion von Stickoxiden in Abgasen von Fahrzeugen als Reduktionsmittel, das vor einem speziellen SCR-Katalysator oder vor einer in einem Schalldämpfer integrierten Gruppe von parallel durchströmbaren SCR-Katalysatormodulen in die Abgasleitung von Verbrennungsanlagen und -kraftmaschinen, insbesondere die von Verbrennungskraftmaschinen von Fahrzeugen, eingeleitet wird und in den SCR-Katalysatoren die Reduktion der im Abgas enthaltenen Stickoxide bewirkt. SCR bedeutet Selective Catalytic Reduction von Stickoxiden (NOₓ) in Gegenwart von Sauerstoff.

Für die Erzeugung von Ammoniak, speziell in Fahrzeugen, sind bisher verschiedene flüssige und feste Ammoniakvorläufersubstanzen bekannt geworden, die nachfolgend näher beschrieben werden.

Bei Nutzfahrzeugen hat sich die Verwendung einer wässrigen, eutektischen Lösung von Harnstoff in Wasser (AdBlue^{™}) mit einem Gehalt von 32,5 Gew.-% Harnstoff, einem Gefrierpunkt von -11°C und einem Ammoniakbildungspotential von 0,2 kg/kg als Ammoniakvorläufersubstanz durchgesetzt. Zum Betrieb der SCR-Anlage bei Temperaturen bis -30 °C, d. h. bis zum Cold Flow Plugging Point (CFPP, untere Betriebstemperatur) des Dieselkraftstoffs in Winterqualität ist eine vergleichsweise aufwendige und gegen Betriebsstörungen anfällige Zusatzheizung von Tank, Leitungen und Ventilen für den AdBlue-Einsatz und für die AdBlue-Logistik in kalten Klimata im Winter erforderlich.

Das für die katalytische Reduktion des NOₓ erforderliche Ammoniak wird bei der thermischen Zersetzung des Harnstoffs gebildet. Hierfür sind folgende Reaktionen relevant: Harnstoff lässt sich nicht verdampfen, sondern zerfällt beim Erhitzen primär in Isocyansäure (HNCO) und Ammoniak (NH₃) gemäß Gleichung [1].

(H₂N₂)CO→ HNCO + NH₃ [1]

Die Isocyansäure kann leicht zu nichtflüchtigen Stoffen, wie Cyanursäure polymerisieren. Hierbei können betriebsstörende Ablagerungen an Ventilen, an Einspritzdüsen und im Abgasrohr entstehen.

Die Isocyansäure (HNCO) wird in Anwesenheit von Wasser (H₂O) zu Ammoniak (NH₃) und Kohlendioxid (CO₂) gemäß Gleichung [2] hydrolysiert.

HNCO + H₂O→ NH₂ + CO₂ [2].

Die Reaktion [2] erfolgt in der Gasphase sehr langsam. Sie verläuft dagegen sehr schnell an Metalloxid- und/oder Zeolithkatalysatoren, etwas langsamer an den durch ihren WO₃-Gehalt stark sauren Metalloxidkatalysatoren, wie den SCR-Katalysatoren auf Basis eines Mischoxids aus Vanadiumoxid, Wolframoxid und Titanoxid.

Bei den in Verbindung mit Kraftfahrzeugen bekannten Anwendungen von Hamstoff-SCR-Katalysatorsystemen wird in der Regel das Motorabgas unter Ausnutzung von dessen Wärmeinhalt zur thermischen Zersetzung des Harnstoffs nach Reaktion [1] genutzt. Prinzipiell kann die Reaktion [1] bereits vor dem SCR-Katalysator ablaufen, während die Reaktion [2] katalytisch beschleunigt werden muss. Prinzipiell können die Reaktionen [1] und [2] auch am SCR-Katalysator ablaufen, dessen SCR-Aktivität dadurch vermindert wird.

Für Länder in einem kalten Klima ist es vorteilhaft, eine einfriersichere Ammoniakvorläufersubstanz verwenden zu können. Durch Zusatz von Ammoniumformiat zur Lösung von Harnstoff in Wasser kann der Gefrierpunkt deutlich abgesenkt werden. Damit werden Zusatzheizungen überflüssig und bei den Herstell- und Logistikkosten erhebliche Ersparnisse erzielt. Eine Lösung von 26,2 % Ammoniumformiat und 20,1 % Harnstoff in Wasser besitzt einen Gefrierpunkt von -30°C und ist kommerziell unter der Bezeichnung Denoxium-30 verfügbar und kann vorteilhaft in der kalten Jahreszeit das AdBlue^{™} ersetzen (SAE technical papers 2005-01-1856).

Durch den Zusatz von Ammoniumformiat zur Lösung von Harnstoff in Wasser kann bei einer Lösung von 35 % Ammoniumformiat und 30 % Harnstoff in Wasser das Ammoniakbildungspotential von 0,2 kg/kg auf 0,3 kg/kg erhöht werden. Damit wird die Reichweite des Fahrzeugs mit einer Füllung der Ammoniakvorläufersubstanz um die Hälfte erhöht und bei Personenkraftwagen generell die Möglichkeit einer Dauerfülllung zwischen den Inspektionsintervallen geschaffen. Ein Nachteil dieser Maßnahme ist das Ansteigen des Gefrierpunkts der Lösung auf den Bereich von -11 bis -15°C (Denoxium January 2005, www.kemira.com).

In der EP 487 886 A1 wird ein Verfahren für die quantitative Zersetzung einer wässrigen Lösung von Harnstoff in Wasser durch Hydrolyse zu Ammoniak (NH₃) und Kohlendioxid (CO₂) in einem Temperaturbereich von 160 bis 550°C vorgeschlagen, bei der im Ergebnis die Bildung unerwünschter Isocyansäure und von deren fester Folgeprodukte vermieden wird. Bei dieser bekannten Methode wird die Harnstofflösung zunächst mittels einer Düse auf einen im oder außerhalb des Abgases befindlichen Verdampfer/Katalysator gesprüht. Die dabei entstehenden gasförmigen Produkte werden zur Nachbehandlung über einen Hydrolysekatalysator geleitet, um eine quantitative Bildung von Ammoniak zu erreichen.

Aus der EP 555 746 A1 ist eine Methode bekannt, wobei der Verdampfer aufgrund seiner Ausgestaltung die Harnstofflösung homogen so verteilt, dass der Kontakt der Tröpfchen mit den Kanalwandungen des Zersetzungskatalysators sichergestellt ist. Durch eine homogene Verteilung werden Ablagerungen auf den Katalysatoren vermieden und der Schlupf von überschüssigem Reduktionsmittel vermindert. Die Harnstoffdosierung sollte nur bei Abgastemperaturen ab 160 °C aktiviert werden, da beim Unterschreiten dieser Temperatur unerwünschte Ablagerungen gebildet werden.

Aus der US 6 051 040 ist die Verwendung von z.B. Ammoniumformiat, Guanidin oder Guanidincarbonat zur selektiven katalytischen Reduktion von Stickoxiden mit Ammoniak in Abgasen bekannt.

Die Überführung von Ammoniumformiat als Ammoniakvoräufersubstanz in Ammoniak ist durch Eindüsen der wässrigen Lösung in das heiße Abgas durch einfache Sublimation ohne besondere Vorbehandlung möglich. Nachteilig ist eine gleichzeitige Freisetzung der sehr korrosiven Ameisensäure und die mögliche Rückbildung von Ammoniumformiat auf der Oberfläche des SCR-Katalysators bei Abgastemperaturen unter 250 °C. Das Porensystem des SCR-Katalysators wird temperaturreversibel verstopft.

Der vorliegenden Erfindung lag daher die Aufgabe zugrunde, geeignete Ammoniakvorläufersubstanzen bereitzustellen, welche die genannten Nachteile entsprechend dem Stand der Technik nicht aufweisen, sondern eine technisch einfache Erzeugung von Ammoniak für die NOₓ-Verminderung nach dem SCR-Verfahren ermöglichen und keine unerwünschten Nebenprodukte bei der Zersetzung bilden.

Diese Aufgabe wurde erfindungsgemäß dadurch gelöst, dass man wässrige Guanidiniumformiat-Lösungen zur selektiven katalytischen Reduktion von Stickoxiden mit Ammoniak in Abgasen von Fahrzeugen einsetzt. Erfindungsgemäß bevorzugt werden die wässrigen Guanidiniumformiat-Lösungen ggf. in Kombination mit Harnstoff und/oder Ammoniak und/oder Ammoniumsalzen eingesetzt.

Es hat sich nämlich überraschenderweise gezeigt, dass das erfindungsgemäß eingesetzte Guanidiniumformiat ein im Vergleich zum Stand der Technik höheres Ammoniak-Bildungspotential aufweist. Darüber hinaus lassen sich die entsprechenden wässrigen Guanidiniumformiat-Lösungen technisch einfach und ohne Bildung fester Zersetzungsprodukte verdampfen, die möglicherweise zu Verkrustungen und Verstopfungen im Abgassystem führen könnten.

Zur selektiven katalytischen Reduktion von Stickoxiden mit Ammoniak in ggf. sauerstoffhaltigen Abgasen von Fahrzeugen werden erfindungsgemäß wässrige Guanidiniumformiat-Lösungen eingesetzt, die vorzugsweise einen FeststoffGehalt (Guanidiniumformiat-Gehalt) von 5 bis 85 Gew.-%, insbesondere 30 bis 80 Gew.-%, bevorzugt 55 bis 60 Gew.-% aufweisen und ggf. mit Harnstoff und/oder Ammoniak bzw. Ammoniumsalzen kombiniert werden. Die Mischungsverhältnisse von Guanidiniumformiat mit Harnstoff sowie Ammoniak bzw. Ammoniumsalzen können in weiten Grenzen variiert werden, es hat sich jedoch als besonders vorteilhaft erwiesen, dass die Mischung von Guanidiniumformiat und Harnstoff einen Guanidiniumformiat-Gehalt von 5 bis 60 Gew.-% und einen Harnstoff-Gehalt von 5 bis 35 Gew.-%, insbesondere 10 bis 30 Gew.-% besitzt. Des Weiteren sind Mischungen von Guanidiniumformiat und Ammoniak bzw. Ammoniumsalzen mit einen Gehalt an Guanidiniumformiat von 5 bis 60 Gew.-% und von Ammoniak bzw. Ammoniumsalz von 5 bis 40 Gew.-%, insbesondere 10 bis 35 Gew.-% als bevorzugt anzusehen.

Die erfindungsgemäß eingesetzten wässrigen Lösungen weisen insbesondere einen Wassergehalt von ≥ 5 Gew.-%, bevorzugt ≥ 10 Gew.-% bezogen auf das Gesamtgewicht der Lösungen auf. Bevorzugt ist Wasser das alleinige oder zumindest Hauptlösungsmittel mit einem Anteil ≥ 50 Gew.-%, bevorzugt ≥ 80 Gew.-% und noch mehr bevorzugt ≥ 90 Gew.-%, bezogen auf das Gesamtgewicht an Lösungsmitteln in der Lösung.

Als Ammoniumsalze haben sich hierbei vor allem Verbindungen der allgemeinen Formel (I) bewährt

R-NH₃^{⊕}X^{Θ} (I)

wobei
R = H, NH₂, C₁-C₁₂-Alkyl,
X^{Θ} = Acetat, Carbonat, Cyanat, Formiat, Hydroxid, Methylat und Oxalat
bedeuten.

Es ist als erfindungswesentlich anzusehen, dass die wässrigen Guanidiniumformiat-Lösungen sowie ggf. die weiteren Komponenten einer katalytischen Zersetzung zu Ammoniak im bevorzugten Temperaturbereich von 150 bis 350 °C unterzogen werden, wobei als weitere Komponenten Kohlendioxid sowie ggf. Kohlenmonoxid gebildet werden. Diese Zersetzung von Guanidiniumformiat zu Ammoniak wird vorzugsweise in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5- oder BEA-Typ, vorgenommen. Als Metalle kommen hierbei insbesondere die Nebengruppen-Elemente und vorzugsweise Eisen oder Kupfer in Frage. Das entsprechende Fe-Zeolith-Material wird nach bekannten Methoden wie z. B. der solid-state-exchange-Methode bspw. mit FeCl₂ hergestellt, anschließend in Form einer Slurry auf das Substrat (wie z. B. Cordierit-Monolith) aufgebracht, getrocknet bzw. bei höheren Temperaturen (ca. 500 °C) calciniert.

Die Metalloxide wie Titanoxid, Aluminiumoxid sowie Siliciumdioxid werden vorzugsweise auf metallischen Trägermaterialien wie z. B. Heizleiter-Legierungen (insbesondere Chrom-Aluminium-Stähle) aufgebracht.

Alternativ kann die katalytische Zersetzung der Guanidiniumformiat-Lösungen bzw. der übrigen Komponenten auch zu Ammoniak und Kohlendioxid erfolgen, wobei katalytisch aktive Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt werden, die mit Gold und/oder Palladium als oxidationsaktive Komponenten imprägniert sind. Die entsprechenden Katalysatoren mit Palladium und/oder Gold als Aktivkomponenten weisen vorzugsweise einen Edelmetallgehalt von 0,001 bis 2 Gew.-%, insbesondere 0,01 bis 1 Gew.-% auf. Mit Hilfe derartiger Oxidationskatalysatoren ist es möglich, die unerwünschte. Bildung von Kohlenmonoxid als Nebenprodukt bei der Zersetzung des Guanidinsalzes bereits bei der Ammoniakerzeugung zu vermeiden.

Bevorzugt wird für die katalytische Zersetzung des Guanidiniumformiats sowie ggf. den weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Es ist im Rahmen der vorliegenden Erfindung möglich, dass man einen Katalysator, bestehend aus zwei Abschnitten einsetzt, wobei der erste Abschnitt nicht oxidationsaktive Beschichtungen und der zweite Abschnitt oxidationsaktive Beschichtungen enthält. Vorzugsweise bestehen 5 bis 90 Vol.-% dieses Katalysators aus nicht oxidationsaktiven Beschichtungen und 10 bis 95 Vol-% aus oxidationsaktiven Beschichtungen. Alternativ kann man die katalytische Zersetzung auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält.

Die katalytische Zersetzung des erfindungsgemäß eingesetzten Guanidiniumformiats sowie ggf. den weiteren Komponenten zu Ammoniak kann vorzugsweise abgasintern im Haupt-, Teil- oder Nebenstrom der Fahrzeugabgase oder abgasextern in einer autobaren und fremdgeheizten Anordnung vorgenommen werden.

Ein weiterer Gegenstand der vorliegenden Erfindung sind wässrige Zusammensetzungen, bestehend aus Guanidiniumformiat mit einer Konzentration von 30 bis 80 Gew.-%, ggf. in Kombination mit Harnstoff und/oder Ammoniak bzw. Ammoniumsalzen sowie als Rest Wasser als Mittel zur selektiven katalytischen Reduktion von Stickoxiden mit Ammoniak in Abgasen von Fahrzeugen. Vorzugsweise weisen die Mischungen von Guanidiniumformiat und Harnstoff einen Guanidiniumformiat-Gehalt von 30 bis 60 Gew.-% und einen Hamstoff-Gehalt von 5 bis 35 Gew.-% auf. Die Mischungen von Guanidiniumformiat mit Ammoniak bzw. Ammoniumsalzen besitzen vorzugsweise einen Gehalt an Guanidiniumformiat von 30 bis 60 Gew.-% und an Ammoniak bzw. Ammoniumsalzen von 5 bis 40 Gew.-%.

Mit Hilfe der erfindungsgemäß vorgeschlagenen wässrigen Guanidiniumformiat-Lösungen ist es möglich, eine Reduktion der Stickoxide in Abgasen von Fahrzeugen um ca. 90 % zu erzielen. Außerdem ist mit den erfindungsgemäß vorgeschlagenen Guanidiniumformiat-Lösungen eine Erhöhung des Ammoniak-Bildungspotentials von 0,2 kg entsprechend dem Stand der Technik bis auf 0,4 kg Ammoniak pro Liter Guanidinsalz bei gleichzeitiger Winterfestigkeit (Gefrierpunkt unter -25 °C) möglich. Schließlich ist auch die Korrosionsgefahr der erfindungsgemäß eingesetzten Guanidiniumformiat-Lösungen im Vergleich zu Lösungen mit Ammoniumformiat deutlich verringert.

Die nachfolgenden Beispiele sollen die Erfindung näher erläutern.

### Beispiele

### Beispiel 1

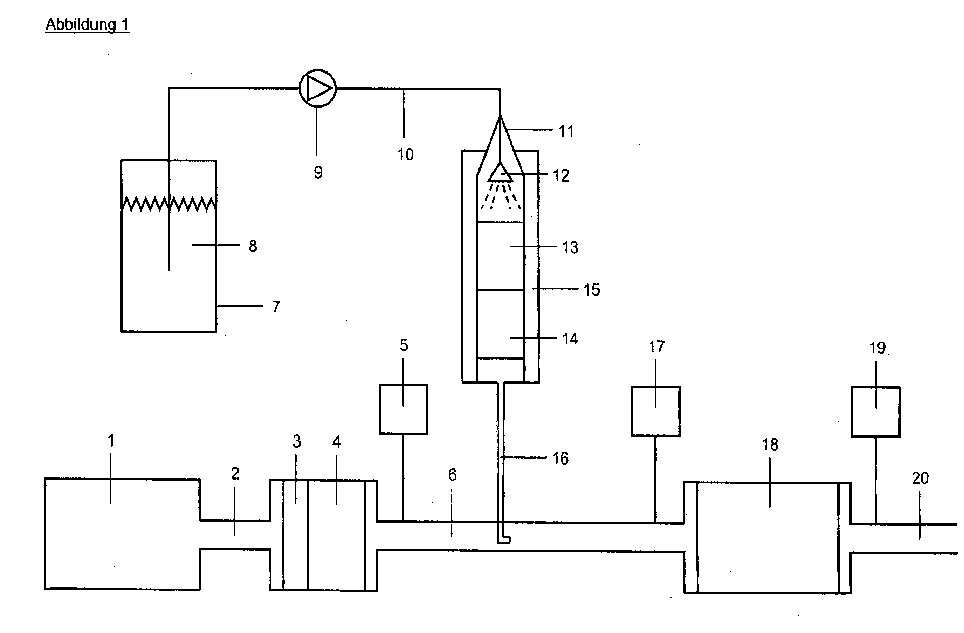

### Verwendung einer wässrigen, 40 Gew.-%igen Guanidiniumformiat-Lösung, (GF) (Fp. < -20°C) als Ammoniakvorläufersubstanz im autobaren Ammoniakgenerator entsprechend der Beschreibung gemäß Abbildung 1

Ein Pkw-Motor 1 erzeugt einen Abgasstrom von 200 Nm³/h, der über das Zwischenrohr 2 über einen Platinoxidationskatalysator 3 und einen Partikelfilter 4 in das Abgaszwischenrohr 6 geleitet wird. Die mit dem FTIR-Gasanalysator 5 gemessene Abgaszusammensetzung im Zwischenrohr 6 ist: 150 ppm Stickoxid, NO; 150 ppm Stickstoffdioxid, NO₂; 7 % Kohlendioxid, CO₂; 8 % Wasserdampf, 10 ppm Kohlenmonoxid, CO.

In einem Tankbehälter 7 befindet sich eine GF-Lösung 8, die mittels einer Dosierpumpe 9 über eine Zuführleitung 10 und einer Düse 12 in einen Reaktor 11 eingesprüht wird. Der Reaktor 11 besteht aus einem auf 250 °C beheizten, vertikal angeordneten Rohr mit Innendurchmesser 51 mm aus austenitischem Edelstahl und besitzt einen Heizmantel 15. Im Reaktor 11 befinden sich die Katalysatoren 13 und 14. Die Katalysatoren sind mit Titandioxid von der Fa. Südchemie AG, D-Heufeld beschichtete Metallträger, Durchmesser 50 mm, Länge 200 mm; Hersteller der Metallträger: Emitec GmbH, D-53797 Lohmar. Der Katalysator 13 basiert auf einem grobzelligen Trägertyp MX/PE 40 cpsi, 100 mm lang. Stromabwärts besteht der Katalysator 14 aus dem feinzelligen Trägertyp MX/PE 200 cpsi, 100 mm lang. Die Stirnfläche des grobzelligen Katalysators 13 wird aus einer Düse 12 mittels Druckdosierpumpe 9 mit einer GF-Lösung 8 besprüht. Die Düse 12 ist im Reaktor 11 axial und stromaufwärts des grobzelligen Katalysators 13 angeordnet. Am Katalysator 13 wird der Wasseranteil der GF-Lösung 8 verdampft und an den Katalysatoren 13 und 14 wird das GF thermohydrolytisch so zersetzt, dass die Bildung der Zwischenprodukte Harnstoff und Isocyansäure, HNCO vermieden wird.

Das entstehende Gemisch aus Ammoniak, Kohlendioxid, Kohlenmonoxid und Wasserdampf wird über das Zuleitungsrohr 16 in das Abgaszwischenrohr 6 stromaufwärts eines SCR-Katalysators 18 bei 300 °C in das mit dem Katalysator 3 und dem Filter 4 vorbehandelte Abgas (200 Nm³/h) des Pkw-Motors 1 eingeleitet. Die Dosierung der GF-Lösung 8 wird so mit der Druckdosierpumpe 9 reguliert, dass mit dem FTIR-Gasanalysator 17 eine Ammoniakkonzentration von 270 ppm gemessen werden kann. Hierbei erfolgt gleichzeitig ein Anstieg der CO-Konzentration um 90 auf 100 ppm durch die Zersetzung des Formiatanteils der GF-Lösung 8. Der Anstieg des CO₂- und Wasserdampfgehalts durch die Verdampfung und Zersetzung von der GF-Lösung 8 ist erwartungsgemäß gering und fast nicht messbar. Die katalytische Hydrolyse des GF ist vollständig, da mit dem Gasanalysator 17 keine Isocyansäure, HNCO detektiert werden kann und keine Ablagerungen von Harnstoff und dessen Zersetzungsprodukten festgestellt werden können.

Stromabwärts des SCR-Katalysators 18 wird mit dem FTIR-Gasanalysator 19 eine Reduktion der Konzentration von NO und NO₂ um 90 % auf 30 ppm gemessen. Hierbei erfolgt eine vollständige Umsetzung des Ammoniaks, NH₃ mit NO und NO₂ zu Stickstoff, N₂. Die Konzentration des Ammoniaks nach SCR-Katalysator 19 ist < 2 ppm.

Die FTIR-Gasanalysatoren 5, 17 und 19 ermöglichen eine simultane Abgasanalyse der Komponenten NO, NO₂ CO, CO₂, H₂O, Ammoniak, NH₃ und Isocyansäure, HNCO.

### Beispiel 2

Es wird analog Beispiel 1 gearbeitet, der Titandioxid-Katalysator 14 wird jedoch durch einen Palladiumoxid-Titandioxid-Katalysator ersetzt, wobei das Titandioxid mit einer wässrigen Pd(NO₃)₂-Lösung so imprägniert wurde, dass nach der Trocknung und Calcinierung (5 Stunden bei 500 °C) ein Katalysator entsteht, der 1 Gew.-% PdO (= ca. 0,9 Gew.-% Pd) enthält und eine partielle Oxidation des Kohlenmonoxids bewirkt wird. Am FTIR-Gasanalysator 17 ist kein Anstieg der CO-Konzentration messbar.

## Patentansprüche

1. Verwendung von wässrigen Guanidiniumformiat-Lösungen ggf. in Kombination mit Harnstoff und/oder Ammoniak bzw. Ammoniumsalzen zur selektiven katalytischen Reduktion von Stickoxiden mit Ammoniak in Abgasen von Fahrzeugen.

2. Verwendung nach Anspruch 1, **dadurch gekennzeichnet, dass** die wässrigen Guanidiniumformiat-Lösungen einen Feststoffgehalt von 5 bis 85 Gew.-%, insbesondere 30 bis 80 Gew.-%, aufweisen.

3. Verwendung nach Anspruch 1 oder 2, **dadurch gekennzeichnet, dass** die wässrigen Lösungen Mischungen von Guanidiniumformiat und Harnstoff mit einem Guanidiniumformiat-Gehalt von 5 bis 60 Gew.-% und einem Harnstoff-Gehalt von 5 bis 35 Gew.-% enthalten.

4. Verwendung nach einem der Ansprüche 1 bis 3, **dadurch gekennzeichnet, dass** die wässrigen Lösungen Mischungen von Guanidiniumformiat und Ammoniak bzw. Ammoniumsalzen mit einem Gehalt an Guanidiniumformiat von 5 bis 60 Gew.-% und an Ammoniak bzw. Ammoniumsalzen von 5 bis 40 Gew.-% enthalten.

5. Verwendung nach einem der Ansprüche 1 bis 4, **dadurch gekennzeichnet, dass** die Ammoniumsalze aus Verbindungen der allgemeinen Formel (I) bestehen
R-NH3^{⊕} X^{Θ} (I)
wobei
R = H, NH₂, C₁-C₁₂-Alkyl,
X^{Θ} = Acetat, Carbonat, Cyanat, Formiat, Hydroxid, Methylat und Oxalat bedeuten.

6. Verwendung nach einem der Ansprüche 1 bis 5, **dadurch gekennzeichnet, dass** das Guanidiniumformiat sowie ggf. die weiteren Komponenten abgasintern im Haupt-, Teil- oder Nebenstrom der Fahrzeug-Abgase oder abgasextern in einer autobaren und fremdgeheizten Anordnung durch katalytische Zersetzung in Ammoniak umgewandelt wird.

7. Verwendung nach Anspruch 6, **dadurch gekennzeichnet, dass** man die katalytische Zersetzung des Guanidiniumformiats sowie ggf. der weiteren Komponenten zu Ammoniak, Kohlendioxid und ggf. Kohlenmonoxid in Gegenwart von katalytisch aktiven, nicht oxidationsaktiven Beschichtungen aus Oxiden, ausgewählt aus der Gruppe Titandioxid, Aluminiumoxid und Siliciumdioxid bzw. deren Mischungen, hydrothermal stabilen Zeolithen, die vollständig oder teilweise metallausgetauscht sind, vornimmt.

8. Verwendung nach Anspruch 6, **dadurch gekennzeichnet, dass** man für die katalytische Zersetzung des Guanidiniumformiats bzw. der übrigen Komponenten zu Ammoniak und Kohlendioxid katalytisch aktive Beschichtungen aus Oxiden, ausgewählt aus der Gruppe Titandioxid, Aluminiumoxid sowie Siliciumdioxid, hydrothermal stabilen Metallzeolithen und deren Mischungen einsetzt, die mit Gold und/oder Palladium als oxidationsaktive Komponenten imprägniert sind.

9. Verwendung nach Anspruch 6, **dadurch gekennzeichnet, dass** für die katalytische Zersetzung des Guanidiniumformiats sowie ggf. den weiteren Komponenten eine katalytische Beschichtung mit Palladium und/oder Gold als Aktivkomponenten mit einem Edelmetall-Gehalt von 0,001 bis 2 Gew.-% eingesetzt wird.

10. Verwendung nach einem der Ansprüche 6 bis 9, **dadurch gekennzeichnet, dass** man einen Katalysator bestehend aus zwei Abschnitten einsetzt, wobei der erste Abschnitt nicht oxidationsaktive Beschichtungen und der zweite Abschnitt oxidationsaktive Beschichtungen enthält.

11. Verwendung nach Anspruch 10, **dadurch gekennzeichnet, dass** 5 bis 90 Vol.-% des Katalysators aus nicht oxidationsaktiven Beschichtungen und 10 bis 95 Vol.-% aus oxidationsaktiven Beschichtungen besteht.

12. Verwendung nach einem der Ansprüche 6 bis 11, **dadurch gekennzeichnet, dass** man die katalytische Zersetzung in Gegenwart von zwei hintereinander angeordneten Katalysatoren durchführt, wobei der erste Katalysator aus nicht oxidationsaktiven Beschichtungen und der zweite Katalysator aus oxidationsaktiven Beschichtungen besteht.

13. Verwendung nach einem der Ansprüche 1 bis 12, **dadurch gekennzeichnet, dass** man die katalytische Zersetzung der Guanidiniumformiat-Lösungen bei 150 bis 350 °C durchführt.

14. Wässrige Zusammensetzungen bestehend aus Guanidiniumformiat mit einer Konzentration von 30 bis 80 Gew.-% ggf. in Kombination mit Harnstoff und/oder Ammoniak bzw. Ammoniumsalzen sowie als Rest Wasser als Mittel zur selektiven katalytischen Reduktion von Stickoxiden mit Ammoniak in Abgasen von Fahrzeugen.

15. Wässrige Zusammensetzungen gemäss Anspruch 14 bestehend aus Guanidiniumformiat mit einer Konzentration von 30 bis 60 Gew.-% und Harnstoff mit einer Konzentration von 5 bis 35 Gew.-% sowie als Rest Wasser als Mittel zur selektiven katalytischen Reduktion von Stickoxiden mit Ammoniak in Abgasen von Fahrzeugen.

16. Wässrige Zusammensetzungen gemäss Anspruch 14 oder 15 bestehend aus Guanidiniumformiat mit einer Konzentration von 30 bis 60 Gew.-% und Ammoniak bzw.
Ammoniumsalzen mit einer Konzentration von 5 bis 40 Gew.-% sowie als Rest Wasser als Mittel zur selektiven katalytischen Reduktion von Stickoxiden mit Ammoniak in Abgasen von Fahrzeugen.

## Claims

1. Use of aqueous guanidinium formate solutions optionally in combination with urea and/or ammonia or ammonium salts for the selective catalytic reduction of nitrogen oxides with ammonia in vehicle exhaust gases.

2. Use according to claim 1, **characterised in that** the aqueous guanidinium formate solutions have a solids content of 5 to 85 wt.%, in particular of 30 to 80 wt. %.

3. Use according to claim 1 or claim 2, **characterised in that** the aqueous solutions contain mixtures of guanidinium formate and urea with a guanidinium formate content of 5 to 60 wt.% and a urea content of 5 to 35 wt.%.

4. Use according to any one of claims 1 to 3, **characterised in that** the aqueous solutions contain mixtures of guanidinium formate and ammonia or ammonium salts having a content of guanidinium formate of 5 to 60 wt.% and of ammonia or ammonium salts of 5 to 40 wt.%.

5. Use according to any one of claims 1 to 4, **characterised in that** the ammonium salts consist of compounds of the general formula (I)
R-NH₃^{⊕}X^{Θ} (I)
wherein
R means H, -NH₂, C₁-C₁₂ alkyl,
X⁽⁻⁾ means acetate, carbonate, cyanate, formate, hydroxide, methylate and oxalate.

6. Use according to any one of claims 1 to 5, **characterised in that** the guanidinium formate optionally together with the further components are converted by catalytic decomposition into ammonia within the exhaust gas in a main stream, sub-stream or secondary stream of the vehicle exhaust gases or outside the exhaust gas in an autobaric and extraneously heated arrangement.

7. Use according to claim 6, **characterised in that** the catalytic decomposition of the guanidinium formate and optionally of the further components into ammonia, carbon dioxide and optionally carbon monoxide is performed in the presence of catalytically active, oxidation-inactive coatings of oxides selected from the group of titanium dioxide, aluminium oxide and silicon dioxide or mixtures thereof, hydrothermally stable zeolites which have been completely or partially metal-exchanged.

8. Use according to claim 6, **characterised in that** the catalytic decomposition of guanidinium formate or of the other components into ammonia and carbon dioxide is performed using catalytically active coatings of oxides, selected from the group titanium dioxide, aluminium oxide and silicon dioxide, hydrothermally stable metal zeolites and mixtures thereof which have been impregnated with gold and/or palladium as oxidation-active components.

9. Use according to claim 6, **characterised in that** the catalytic decomposition of guanidinium formate and optionally of the further components is performed using a catalytic coating comprising palladium and/or gold as the active component with a noble metal content of 0.001 to 2 wt.%.

10. Use according to any one of claims 6 to 9, **characterised in that** a catalyst consisting of two sections is used, the first section containing oxidation-inactive coatings and the second section oxidation-active coatings.

11. Use according to claim 10, **characterised in that** 5 to 90 vol.% of the catalyst consists of oxidation-inactive coatings and 10 to 95 vol.% of oxidation-active coatings.

12. Use according to any one of claims 6 to 11, **characterised in that** the catalytic decomposition is performed in the presence of two catalysts arranged in succession, the first catalyst consisting of oxidation-inactive coatings and the second catalyst of oxidation-active coatings.

13. Use according to any one of claims 1 to 12, **characterised in that** the catalytic decomposition of the guanidinium formate solutions is carried out at 150 to 350°C.

14. Aqueous compositions consisting of guanidinium formate with a concentration of 30 to 80 wt.% optionally in combination with urea and/or ammonia or ammonium salts together with water as the remainder as an agent for the selective catalytic reduction of nitrogen oxides with ammonia in vehicle exhaust gases.

15. Aqueous compositions according to claim 14 consisting of guanidinium formate with a concentration of 30 to 60 wt.% and urea with a concentration of 5 to 35 wt.% together with water as the remainder as an agent for the selective catalytic reduction of nitrogen oxides with ammonia in vehicle exhaust gases.

16. Aqueous compositions according to claim 14 or claim 15 consisting of guanidinium formate with a concentration of 30 to 60 wt.% and ammonia or ammonium salts with a concentration of 5 to 40 wt.% together with water as the remainder as an agent for the selective catalytic reduction of nitrogen oxides with ammonia in vehicle exhaust gases.

## Revendications

1. Utilisation de solutions aqueuses de formiate de guanidinium éventuellement en combinaison avec l'urée et/ou l'ammoniac ou des sels d'ammonium pour la réduction catalytique sélective d'oxydes d'azote avec l'ammoniac dans les gaz d'échappement de véhicules.

2. Utilisation selon la revendication 1 **caractérisée en ce que** les solutions aqueuses de formiate de guanidinium présentent une teneur en solides de 5 à 85 % en poids, en particulier de 30 à 80 % en poids.

3. Utilisation selon la revendication 1 ou 2 **caractérisée en ce que** les solutions aqueuses contiennent des mélanges de formiate de guanidinium et d'urée avec une teneur en formiate de guanidinium de 5 à 60 % en poids et une teneur en urée de 5 à 35 % en poids.

4. Utilisation selon l'une des revendications 1 à 3 **caractérisée en ce que** les solutions aqueuses contiennent des mélanges de formiate de guanidinium et d'ammoniac ou de sels d'ammonium avec une teneur en formiate de guanidinium de 5 à 60 % en poids et une teneur en ammoniac ou en sels d'ammonium de 5 à 40 % en poids.

5. Utilisation selon l'une des revendications 1 à 4 **caractérisée en ce que** les sels d'ammonium consistent en composés de formule générale (I)
R-NH₃⁺X⁻ (I)
où
R = N, NH₂, C₁-C₁₂-alkyle,
X⁻ = acétate, carbonate, cyanate, formiate, hydroxyde, méthylate et oxalate.

6. Utilisation selon l'une des revendications 1 à 5 **caractérisée en ce que** le formiate de guanidinium et éventuellement les autres composants sont convertis en ammoniac par décomposition catalytique de manière interne aux gaz d'échappement dans le courant principal, partiel ou secondaire des gaz d'échappement de véhicule ou de manière externe aux gaz d'échappement dans un agencement autobare et à chauffage extérieur.

7. Utilisation selon la revendication 6 **caractérisée en ce que** l'on conduit la décomposition catalytique du formiate de guanidinium et éventuellement des autres composants en ammoniac, dioxyde de carbone et éventuellement monoxyde de carbone en présence de revêtements catalytiquement actifs, non actifs pour l'oxydation en oxydes, choisis dans le groupe dioxyde de titane, oxyde d'aluminium et dioxyde de silicium ou leurs mélanges, zéolites stables du point de vue hydrothermal, qui sont totalement ou partiellement soumises à un échange de métaux.

8. Utilisation selon la revendication 6 **caractérisée en ce que** l'on utilise pour la décomposition catalytique du formiate de guanidinium et des autres composants en ammoniac et dioxyde de carbone des revêtements catalytiquement actifs en oxydes, choisis dans le groupe dioxyde de titane, oxyde d'aluminium et dioxyde de silicium, zéolites métalliques stables du point de vue hydrothermal et leurs mélanges, qui sont imprégnés d'or et/ou de palladium comme composants actifs pour l'oxydation.

9. Utilisation selon la revendication 6 **caractérisée en ce que** l'on utilise pour la décomposition catalytique du formiate de guanidinium et éventuellement des autres composants un revêtement catalytique avec du palladium et/ou de l'or comme composants actifs avec une teneur en métaux nobles de 0,001 à 2 % en poids.

10. Utilisation selon l'une des revendications 6 à 9 **caractérisée en ce que** l'on utilise un catalyseur consistant en deux sections, où la première section contient des revêtements non actifs pour l'oxydation et la deuxième section contient des revêtements actifs pour l'oxydation.

11. Utilisation selon la revendication 10 **caractérisée en ce que** 5 à 90 vol. % du catalyseur consistent en revêtements non actifs pour l'oxydation et 10 à 95 vol. % consistent en revêtements actifs pour l'oxydation.

12. Utilisation selon l'une des revendications 6 à 11 **caractérisée en ce que** l'on conduit la décomposition catalytique en présence de deux catalyseurs disposés l'un derrière l'autre, où le premier catalyseur consiste en revêtements non actifs pour l'oxydation et le deuxième catalyseur consiste en revêtements actifs pour l'oxydation.

13. Utilisation selon l'une des revendications 1 à 12 **caractérisée en ce que** l'on conduit la décomposition catalytique des solutions de formiate de guanidinium à 150 à 350°C.

14. Compositions aqueuses consistant en formiate de guanidinium avec une concentration de 30 à 80 % en poids éventuellement en combinaison avec l'urée et/ou l'ammoniac ou des sels d'ammonium ainsi que l'eau comme reste comme agent pour la réduction catalytique sélective d'oxydes d'azote avec l'ammoniac dans les gaz d'échappement de véhicules.

15. Compositions aqueuses selon la revendication 14 consistant en formiate de guanidinium avec une concentration de 30 à 60 % en poids et en urée avec une concentration de 5 à 35 % en poids ainsi que l'eau comme reste comme agent pour la réduction catalytique sélective d'oxydes d'azote avec l'ammoniac dans les gaz d'échappement de véhicules.

16. Compositions aqueuses selon la revendication 14 ou 15 consistant en formiate de guanidinium avec une concentration de 30 à 60 % en poids et en ammoniac ou en sels d'ammonium avec une concentration de 5 à 40 % en poids ainsi que l'eau comme reste comme agent pour la réduction catalytique sélective d'oxydes d'azote avec l'ammoniac dans les gaz d'échappement de véhicules.
